# EUROPEAN PATENT APPLICATION

(11) **EP 4 827 236 A1**
(43) Date of publication of application: **21.10.2026**
(21) Application number: 24902745.9
(22) Date of filing: 09.12.2024
(51) Int. Cl.: H04W 88/04

(54) **CELL CONFIGURATION METHOD AND APPARATUS, AND RELAY DEVICE, TERMINAL AND NETWORK DEVICE**

(30) Priority: 11.12.2023 CN 202311699413
(71) Applicant: Vivo Mobile Communication Co., Ltd., Dongguan, Guangdong 523863 (CN)
(72) Inventor: MAO, Yuanze, Dongguan, Guangdong 523863 (CN)
(74) Representative: Lavoix
(86) International application number: PCT/CN2024/137699
(87) International publication number: WO 2025/124324

(57) **Abstract**

This application discloses a cell configuration method and apparatus, a relay device, a terminal, and a network device and belongs to the field of communication technologies. The cell configuration method according to an embodiment of this application includes: a relay device receives a first request message sent by a first terminal, where the first request message is used for requesting a network device to configure an SCell for the first terminal; the relay device sends a second request message to the network device, where the second request message is determined based on the first request message; the relay device receives SCell configuration information sent by the network device, where the SCell configuration information is used for configuring an SCell for the first terminal, and the SCell configuration information includes information of an SCell added by the relay device; and the relay device sends the SCell configuration information to the first terminal.

## Description

### CROSS-REFERENCE TO RELATED APPLICATIONS

This application claims priority to Chinese Patent Application No. 202311699413.9, entitled "CELL CONFIGURATION METHOD AND APPARATUS, RELAY DEVICE, TERMINAL, AND NETWORK DEVICE" and filed with the China National Intellectual Property Administration on December 11, 2023, which is incorporated herein by reference in its entirety.

### TECHNICAL FIELD

This application belongs to the field of communication technologies, and specifically relates to a cell configuration method and apparatus, a relay device, a terminal, and a network device.

### BACKGROUND

A relay (Relay) technology in a wireless communication system means that one or more relay devices are added between a network device (for example, a base station) and a terminal, to forward a radio signal one or more times. For example, when quality of a link between a remote user equipment (User Equipment, UE) and the network device deteriorates, the remote UE may select an appropriate relay UE, to ensure service continuity by using a UE-to-network (UE-to-Network, U2N) relay technology. The remote UE may also be referred to as a remote terminal, or the like.

Currently, carrier aggregation (Carrier Aggregation, CA) is introduced to improve network resource utilization, a transmission rate, and the like. However, in related technologies, configuration of CA for the terminal and configuration of CA for the relay device are independent of each other. This easily leads to a mismatch between a transmission rate of the terminal and a transmission rate of the relay device, affecting the transmission rate of the terminal.

### SUMMARY

Embodiments of this application provide a cell configuration method and apparatus, a relay device, a terminal, and a network device, to reduce occurrence of a mismatch between a transmission rate of the terminal and a transmission rate of the relay device, thereby ensuring the transmission rate of the terminal.

According to a first aspect, a cell configuration method is provided. The method includes: a relay device receives a first request message sent by a first terminal, where the first request message is used for requesting a network device to configure a secondary cell (Secondary Cell, SCell) for the first terminal; the relay device sends a second request message to the network device, where the second request message is determined based on the first request message; the relay device receives SCell configuration information sent by the network device, where the SCell configuration information is used for configuring an SCell for the first terminal, and the SCell configuration information includes information of an SCell added by the relay device; and the relay device sends the SCell configuration information to the first terminal.

According to a second aspect, a cell configuration apparatus is provided. The apparatus is applied to a relay device and includes: a first receiving module, configured to receive a first request message sent by a first terminal, where the first request message is used for requesting a network device to configure a secondary cell (SCell) for the first terminal; a first sending module, configured to send a second request message to the network device, where the second request message is determined based on the first request message; a second receiving module, configured to receive SCell configuration information sent by the network device, where the SCell configuration information is used for configuring an SCell for the first terminal, and the SCell configuration information includes information of an SCell added by the relay device; and a second sending module, configured to send the SCell configuration information to the first terminal.

According to a third aspect, a cell configuration method is provided. The method includes: a first terminal sends a first request message to a relay device, where the first request message is used for requesting a network device to configure an SCell for the first terminal; the first terminal receives SCell configuration information sent by the relay device, where the SCell configuration information is used for configuring an SCell for the first terminal, and the SCell configuration information includes information of an SCell added by the relay device; and the first terminal activates the SCell configured by the SCell configuration information.

According to a fourth aspect, a cell configuration apparatus is provided. The apparatus is applied to a first terminal and includes: a fourth sending module, configured to send a first request message to a relay device, where the first request message is used for requesting a network device to configure an SCell for the first terminal; a fourth receiving module, configured to receive SCell configuration information sent by the relay device, where the SCell configuration information is used for configuring an SCell for the first terminal, and the SCell configuration information includes information of an SCell added by the relay device; and a first activation module, configured to activate the SCell configured by the SCell configuration information.

According to a fifth aspect, a cell configuration method is provided. The method includes: a network device receives a second request message sent by a relay device, where the second request message is used for requesting the network device to configure an SCell for a first terminal; and the network device sends SCell configuration information to the relay device, where the SCell configuration information is used for configuring an SCell for the first terminal, and the SCell configuration information includes information of an SCell added by the relay device.

According to a sixth aspect, a cell configuration apparatus is provided. The apparatus is applied to a network device and includes: a sixth receiving module, configured to receive a second request message sent by a relay device, where the second request message is used for requesting the network device to configure an SCell for a first terminal; and a sixth sending module, configured to send SCell configuration information to the relay device, where the SCell configuration information is used for configuring an SCell for the first terminal, and the SCell configuration information includes information of an SCell added by the relay device.

According to a seventh aspect, a relay device is provided. The relay device includes a processor and a memory, where the memory stores a program or instructions runnable on the processor, and the program or instructions, when executed by the processor, implement the steps of the method according to the first aspect.

According to an eighth aspect, a relay device is provided, including a processor and a communication interface, where the communication interface is configured to receive a first request message sent by a first terminal, where the first request message is used for requesting a network device to configure an SCell for the first terminal; send a second request message to the network device, where the second request message is determined based on the first request message; receive SCell configuration information sent by the network device, where the SCell configuration information is used for configuring an SCell for the first terminal, and the SCell configuration information includes information of an SCell added by the relay device; and send the SCell configuration information to the first terminal.

According to a ninth aspect, a terminal is provided. The terminal includes a processor and a memory, where the memory stores a program or instructions runnable on the processor, and the program or instructions, when executed by the processor, implement the steps of the method according to the third aspect.

According to a tenth aspect, a terminal is provided, including a processor and a communication interface, where the communication interface is configured to send a first request message to a relay device, where the first request message is used for requesting a network device to configure an SCell for the first terminal; and receive SCell configuration information sent by the relay device, where the SCell configuration information is used for configuring an SCell for the first terminal, and the SCell configuration information includes information of an SCell added by the relay device; and the processor is configured to activate the SCell configured by the SCell configuration information.

According to an eleventh aspect, a network device is provided. The network device includes a processor and a memory, where the memory stores a program or instructions runnable on the processor, and the program or instructions, when executed by the processor, implement the steps of the method according to the fifth aspect.

According to a twelfth aspect, a network device is provided, including a processor and a communication interface, where the communication interface is configured to receive a second request message sent by a relay device, where the second request message is used for requesting the network device to configure an SCell for a first terminal; and send SCell configuration information to the relay device, where the SCell configuration information is used for configuring an SCell for the first terminal, and the SCell configuration information includes information of an SCell added by the relay device.

According to a thirteenth aspect, a cell configuration system is provided, including: a relay device, a terminal, and a network device, where the relay device may be configured to perform the steps of the cell configuration method according to the first aspect, the terminal may be configured to perform the steps of the cell configuration method according to the third aspect, and the network device may be configured to perform the steps of the cell configuration method according to the fifth aspect.

According to a fourteenth aspect, a readable storage medium is provided, where the readable storage medium stores a program or instructions, and the program or instructions, when executed by a processor, implement the steps of the method according to the first aspect, or implement the steps of the method according to the third aspect, or implement the steps of the method according to the fifth aspect.

According to a fifteenth aspect, a chip is provided. The chip includes a processor and a communication interface. The communication interface is coupled to the processor. The processor is configured to run a program or instructions, to implement the steps of the method according to the first aspect, or to implement the steps of the method according to the third aspect, or to implement the steps of the method according to the fifth aspect.

According to a sixteenth aspect, a computer program/program product is provided, where the computer program/program product is stored in a storage medium, and the computer program/program product, when executed by at least one processor, implements the steps of the method according to the first aspect, or implements the steps of the method according to the third aspect, or implements the steps of the method according to the fifth aspect.

In the embodiments of this application, a relay device receives a first request message sent by a first terminal, where the first request message is used for requesting a network device to configure an SCell for the first terminal; sends a second request message to the network device, where the second request message is determined based on the first request message; receives SCell configuration information sent by the network device, where the SCell configuration information is used for configuring an SCell for the first terminal, and the SCell configuration information includes information of an SCell added by the relay device; and sends the SCell configuration information to the first terminal. That is, in the embodiments of this application, when the SCell is configured for the first terminal, the information of the SCell added by the relay device is configured to the first terminal. This helps ensure consistency between the SCell added by the relay device and the SCell added for the first terminal, thereby reducing the occurrence of a mismatch between a transmission rate of the first terminal and a transmission rate of the relay device, and ensuring the transmission rate of the first terminal.

### BRIEF DESCRIPTION OF THE DRAWINGS

FIG. 1 is a block diagram of a wireless communication system to which an embodiment of this application is applicable;
FIG. 2 is a flowchart of a cell configuration method according to an embodiment of this application;
FIG. 3 is a flowchart of another cell configuration method according to an embodiment of this application;
FIG. 4 is a flowchart of still another cell configuration method according to an embodiment of this application;
FIG. 5 is a flowchart of yet another cell configuration method according to an embodiment of this application;
FIG. 6 is a structural diagram of a cell configuration apparatus according to an embodiment of this application;
FIG. 7 is a structural diagram of another cell configuration apparatus according to an embodiment of this application;
FIG. 8 is a structural diagram of still another cell configuration apparatus according to an embodiment of this application;
FIG. 9 is a structural diagram of a communication device according to an embodiment of this application;
FIG. 10 is a structural diagram of a terminal according to an embodiment of this application; and
FIG. 11 is a structural diagram of a network device according to an embodiment of this application.

### DETAILED DESCRIPTION

The technical solutions in embodiments of this application are clearly described below with reference to the accompanying drawings in the embodiments of this application. Clearly, the described embodiments are some rather than all of the embodiments of this application. Based on the embodiments of this application, all other embodiments obtained by a person of ordinary skill in the art fall within the protection scope of this application.

The terms such as "first" and "second" in this application are used to distinguish between similar objects and are not intended to describe a specific order or sequence. It should be understood that the terms used in such a way may be interchanged under appropriate circumstances so that the embodiments of this application can be implemented in an order other than those illustrated or described herein, the objects distinguished by "first" and "second" are usually of one type, and the number of objects is not limited. For example, one or more first objects may be provided. In addition, "or" in this application indicates at least one of connected objects. For example, "A or B" covers three schemes, namely scheme 1: including A and excluding B; scheme 2: including B and excluding A; and scheme 3: including both A and B. The character "/" generally indicates an "or" relationship between the associated objects.

The term "indication" in this application may be either a direct indication (or an explicit indication) or an indirect indication (or an implicit indication). The direct indication may be understood as that a sender clearly informs, in an indication sent, a receiver of content such as specific information, an operation needing to be executed, or a request result; and the indirect indication may be understood as that the receiver determines corresponding information or performs determining according to an indication sent by the sender and determines an operation needing to be executed, a request result, or the like according to a determining result.

It should be noted that the technologies described in the embodiments of this application are not limited to a long term evolution (Long Term Evolution, LTE)/LTE-advanced (LTE-Advanced, LTE-A) system, and may also be applied to other wireless communication systems such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), or another system. The terms "system" and "network" in the embodiments of this application are often used interchangeably, and the described technology can be applied to the systems and radio technologies mentioned above, and can also be applied to other systems and radio technologies. The following describes a new radio (New Radio, NR) system for example purposes, and NR terms are used in most of the following descriptions, but these technologies can also be applied to a system other than the NR system, such as a 6th generation (6^{th} Generation, 6G) communication system.

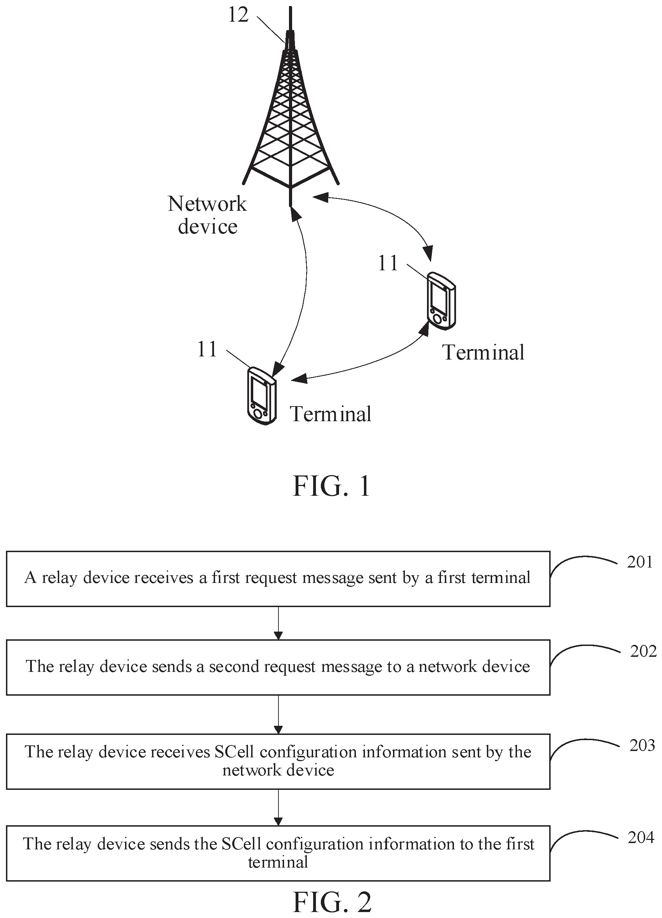

FIG. 1 is a block diagram of a wireless communication system to which an embodiment of this application is applicable. The wireless communication system includes a terminal 11 and a network device 12. The terminal 11 may be a mobile phone, a tablet personal computer (Tablet Personal Computer), a laptop computer (Laptop Computer), a notebook computer, a personal digital assistant (Personal Digital Assistant, PDA), a palmtop computer, a netbook, an ultra-mobile personal computer (Ultra-mobile Personal Computer, UMPC), a mobile Internet device (Mobile Internet Device, MID), an augmented reality (Augmented Reality, AR)/virtual reality (Virtual Reality, VR) device, a robot, a wearable device (Wearable Device), a flight vehicle (flight vehicle), vehicle user equipment (Vehicle User Equipment, VUE), shipborne equipment, pedestrian user equipment (Pedestrian User Equipment, PUE), a smart home (a household device with a wireless communication function, such as a refrigerator, a television, a washing machine or furniture), a game console, a personal computer (Personal Computer, PC), an automated teller machine, a self-service machine, or another terminal-side device. The wearable device includes a smartwatch, a smart band, a smart headset, smart glasses, smart jewelry (a smart bracelet, a smart chain bracelet, a smart ring, a smart necklace, a smart anklet, a smart ankle chain, or the like), a smart wrist strap, a smart garment, or the like. The vehicle user equipment may also be referred to as an in-vehicle terminal, an in-vehicle controller, an in-vehicle module, an in-vehicle component, an in-vehicle chip, an in-vehicle unit, or the like. It should be noted that a specific type of the terminal 11 is not limited in this embodiment of this application. The network device 12 may include an access network device or a core network device, where the access network device may also be referred to as a radio access network (Radio Access Network, RAN) device, a radio access network function, or a radio access network unit. The access network device may include a base station, a wireless local area network (Wireless Local Area Network, WLAN) access point (Access Point, AP), a wireless fidelity (Wireless Fidelity, WiFi) node, or the like. The base station may be referred to as a Node B (Node B, NB), an evolved Node B (Evolved Node B, eNB), the next generation Node B (the next generation Node B, gNB), a new radio Node B (New Radio Node B, NR Node B), an access point, a relay base station (Relay Base Station, RBS), a serving base station (SBS), a base transceiver station (Base Transceiver Station, BTS), a radio base station, a radio transceiver, a basic service set (Basic Service Set, BSS), an extended service set (Extended Service Set, ESS), a home node B (home Node B, HNB), a home evolved node B (home evolved Node B), a transmission reception point (Transmission Reception Point, TRP), or another suitable term in the field as long as the same technical effect is achieved, and the base station is not limited to a specific technical word. It should be noted that in this embodiment of this application, description is provided only by taking the base station in the NR system as an example, and a specific type of the base station is not limited.

The core network device may include, but is not limited to, at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF), an edge application server discovery function (Edge Application Server Discovery Function, EASDF), a unified data management (Unified Data Management, UDM), a unified data repository (Unified Data Repository, UDR), a home subscriber server (Home Subscriber Server, HSS), a centralized network configuration (Centralized network configuration, CNC), a network repository function (Network Repository Function, NRF), a network exposure function (Network Exposure Function, NEF), a local NEF (local NEF, or L-NEF), a binding support function (Binding Support Function, BSF), an application function (Application Function, AF), and the like. It should be noted that, in this embodiment of this application, description is provided only by taking a core network device in an NR system as an example, and a specific type of the core network device is not limited.

It should be noted that the first terminal provided in this embodiment of this application may be any terminal that communicates with a network device by using a relay device. The first terminal may be referred to as a remote terminal, a remote UE, or the like. The relay device provided in this embodiment of this application may be a terminal, a base station, or the like. When the relay device is a terminal, the terminal having a relay function may be referred to as a relay device, a relay UE, or the like.

A cell configuration method according to an embodiment of this application is described in detail below by using some embodiments and application scenarios thereof with reference to the accompanying drawings.

Refer to FIG. 2. FIG. 2 is a flowchart of a cell configuration method according to an embodiment of this application. The method may be performed by a relay device. As shown in FIG. 2, the method includes the following steps.

Step 201: A relay device receives a first request message sent by a first terminal, where the first request message is used for requesting a network device to configure an SCell for the first terminal.

In this embodiment, the first request message is used for requesting the network device to configure the SCell for the first terminal, which may also be referred to as that the first request message is used for requesting to add the SCell or configure CA or add CA, or the like for the first terminal. That is, in this embodiment, configuring the SCell may also be referred to as adding the SCell, configuring CA, adding CA, or the like.

In some optional embodiments, the first request message may include a measurement report of a cell. For example, the first request message may include an A4 measurement report of the cell. In addition, the first request message may be a radio resource control (Radio Resource Control, RRC) message.

In some optional embodiments, the first request message may include CA information of the relay device, and the CA information includes information of an SCell added by the relay device.

It may be understood that before the relay device receives the first request message sent by the first terminal, a communication connection is established between the first terminal and the relay device.

Step 202: The relay device sends a second request message to the network device, where the second request message is determined based on the first request message.

For example, the second request message may be the same as the first request message, that is, the relay device forwards only the first request message received from the first terminal to the network device. Alternatively, the second request message may be a request message newly generated according to the first request message. For example, the relay device may insert the information of the SCell added by the relay device into the first request message, and send, to the network device, the first request message into which the information of the SCell added by the relay device is inserted. The second request message is the first request message into which the information of the SCell added by the relay device is inserted.

Descriptions are provided below according to cases.

Case 1: The first terminal adds the CA information of the relay device, that is, the first request message includes the CA information of the relay device, the second request message also includes the CA information of the relay device, and the CA information of the relay device that is included in the second request message is the same as the CA information of the relay device that is included in the first request message. In this case, when the relay device receives the first request message, the relay device may directly forward the CA information of the relay device that is included in the first request message to the network device.

Case 2: The relay device adds the CA information of the relay device, that is, the first request message may not include the CA information of the relay device while the second request message includes the CA information of the relay device. In this case, when the relay device receives the first request message, the relay device may insert the CA information of the relay device into the first request message, and send the first request message into which the CA information of the relay device is inserted to the network device. The second request message is the first request message into which the CA information of the relay device is inserted.

Case 3: The network device locally obtains the CA information of the relay device, that is, the first request message may include no CA information of the relay device, the second request message may also include no CA information of the relay device, and when the network device receives the second request message, the network device locally obtains the CA information of the relay device.

It may be understood that, when the network device receives the second request message, the network device may configure the SCell for the first terminal. For example, when the second request message includes information of the SCell added by the relay device, the network device may configure the SCell added by the relay device for the first terminal. When the second request message includes no information of the SCell added by the relay device, the network device may locally search for the information of the SCell added by the relay device, and then may configure the SCell added by the relay device for the first terminal.

Step 203: The relay device receives SCell configuration information sent by the network device, where the SCell configuration information is used for configuring an SCell for the first terminal, and the SCell configuration information includes information of an SCell added by the relay device.

In this embodiment, the SCell configuration information may include information of at least one SCell, and the information of the at least one SCell includes the information of the SCell added by the relay device. That is, the network device may configure at least one SCell for the first terminal, and the at least one SCell includes the SCell added by the relay device. The information of the SCell may include, but is not limited to, at least one of an identifier (namely an SCell ID) of the SCell, a bandwidth of the SCell, a frequency point of the SCell, and the like.

Step 204: The relay device sends the SCell configuration information to the first terminal.

In this step, the relay device may forward the SCell configuration information received from the network device to the first terminal, and then the first terminal may activate the SCell based on the SCell configuration information. For example, when the SCell configuration information includes information of one SCell, the first terminal may activate the SCell; or when the SCell configuration information includes information of at least two SCells, the first terminal may activate at least one of the at least two SCells.

In the cell configuration method according to this embodiment of this application, the relay device receives the first request message sent by the first terminal, where the first request message is used for requesting the network device to configure an SCell for the first terminal; sends the second request message to the network device, where the second request message is determined based on the first request message; receives the SCell configuration information sent by the network device, where the SCell configuration information is used for configuring an SCell for the first terminal, and the SCell configuration information includes information of an SCell added by the relay device; and sends the SCell configuration information to the first terminal. That is, in this embodiment of this application, when the SCell is configured for the first terminal, the information of the SCell added by the relay device is configured to the first terminal. This helps ensure consistency between the SCell added by the relay device and the SCell added for the first terminal, thereby reducing the occurrence of a mismatch between a transmission rate of the first terminal and a transmission rate of the relay device, and ensuring the transmission rate of the first terminal.

Optionally, the second request message includes CA information of the relay device, and the CA information includes the information of the SCell added by the relay device.

In this embodiment, the second request message sent by the relay device to the network device includes CA information of the relay device, and the CA information includes the information of the SCell added by the relay device. In some optional embodiments, the CA information may further include information of a primary cell (Primary Cell, PCell) of the relay device.

For example, the first terminal may include the CA information of the relay device in the first request message. In this case, the CA information of the relay device included in the second request message may be the same as the CA information of the relay device included in the first request message. Alternatively, the relay device may add the CA information of the relay device to the received first request message. In this case, the second request message may be the first request message to which the CA information of the relay device is added.

In this embodiment, the second request message sent to the network device includes the CA information of the relay device, so that the network device may directly configure an SCell for the first terminal according to the CA information of the relay device that is included in the second request message. This can reduce operations of the network device while ensuring consistency between the SCell added by the relay device and the SCell added for the first terminal.

Optionally, before that the relay device sends a second request message to the network device, the method further includes:
the relay device generates the second request message according to the first request message and the CA information of the relay device.

In this embodiment, when the relay device receives the first request message, the relay device may add the CA information of the relay device to the first request message, to obtain a second request message. That is, the second request message is the first request message to which the CA information of the relay device is added, and then the relay device may send the second request message to the network device.

It should be noted that, in some scenarios, CA information of the relay device changes. For example, when the relay device moves, an SCell added by the relay device may change. Therefore, adding the CA information of the relay device to the first request message by the relay device helps ensure that the added CA information is current CA information of the relay device. This can reduce occurrence of inconsistency between the SCell added by the relay device and the SCell added for the first terminal caused by a change in the CA information of the relay device.

In some optional embodiments, when the relay device currently adds or configures no SCell or CA, the relay device may directly forward the first request message to the network device upon receiving the first request message. In this case, the network device may configure an SCell for the first terminal in an SCell configuration manner in the prior art, for example, may configure an SCell for the first terminal based on a measurement report of a cell reported by the first terminal.

Optionally, that the relay device generates the second request message according to the first request message and the CA information of the relay device includes:
the relay device generates the second request message according to the first request message and current CA information of the relay device, when the relay device and the first terminal satisfy a first condition, where
the first condition includes any one of the following:
   a first SIM card and a second SIM card belong to a same operator; and
   a first operator to which the first SIM card belongs is different from a second operator to which the second SIM card belongs, and inter-operator network roaming is supported between a network of the first operator and a network of the second operator,
   where the first SIM card is a SIM card used by the relay device to connect to a network, and the second SIM card is a SIM card used by the first terminal to connect to a network.

It should be noted that, when the relay device and the first terminal do not satisfy the first condition, the relay device may directly forward the first request message to the network device. In this case, the network device may configure the SCell for the first terminal in an SCell configuration manner in the prior art, for example, may configure the SCell for the first terminal based on a measurement report of a cell reported by the first terminal.

In this embodiment, the relay device generates the second request message according to the first request message and the current CA information of the relay device, when the relay device and the first terminal satisfy the first condition. This can reduce the occurrence of a failure to add a secondary cell to the first terminal due to an operator network used by the first terminal and the relay device, thereby helping improve efficiency of adding the secondary cell to the first terminal.

Optionally, before that a relay device receives a first request message sent by a first terminal, the method further includes:
the relay device receives a query request sent by the first terminal, where the query request is used for requesting to query CA information of the relay device; and
the relay device sends query response information to the first terminal, where the query response information includes the CA information of the relay device.

For example, when it is determined that a secondary cell needs to be added, the first terminal may send a query request to the relay device, and the relay device sends current CA information of the relay device to the first terminal in response to the query request. Alternatively, within a time period during which the relay device and the first terminal are in a communication connection state, the relay device may synchronize the CA information of the relay device to the first terminal. For example, the first terminal may send a query request to the relay device every preset duration, and the relay device sends current CA information of the relay device to the first terminal in response to the query request. The preset duration may be properly set according to an actual requirement to, for example, 1 minute or 5 minutes.

It should be noted that when the first terminal receives the CA information of the relay device, the first terminal may store the CA information of the relay device, or send the CA information of the relay device to the network device, or the like.

In this embodiment, the relay device synchronizes the CA information of the relay device to the first terminal, so that the first terminal can implement secondary cell configuration and addition based on the CA information from the relay device. For example, a secondary cell configuration request, namely the first request message, is sent to the network device according to the CA information of the relay device, or a secondary cell is added according to the CA information of the relay device when the network device fails to configure a secondary cell for the first terminal, thereby helping ensure the consistency between the SCell added by the relay device and the SCell added for the first terminal.

Optionally, the first request message includes CA information of the relay device, the second request message includes CA information of the relay device, and the CA information of the relay device included in the second request message is the same as the CA information of the relay device included in the first request message.

For example, when the first terminal obtains the CA information of the relay device, the first terminal may add the CA information of the relay device to the first request message. When the relay device receives the first request message, the relay device may forward the CA information of the relay device included in the first request message to the network device. In this case, the second request message may be a message forwarded by the relay device to the network device, and the message includes the CA information of the relay device that is included in the first request message.

In this embodiment, the first terminal adds the CA information of the relay device to the first request message. In this case, the relay device may directly forward the CA information of the relay device that is included in the first request message to the network device. This can simplify a processing flow of the relay device. In addition, this further helps reduce modification to the processing flow of the relay device since an existing relay device is usually only configured to forward a message.

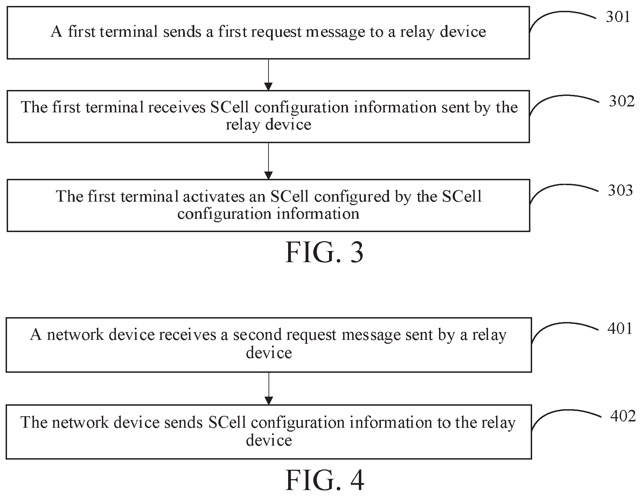

Refer to FIG. 3. FIG. 3 is a flowchart of a cell configuration method according to an embodiment of this application. The method may be performed by a first terminal. As shown in FIG. 3, the method includes the following steps.

Step 301: The first terminal sends a first request message to a relay device, where the first request message is used for requesting a network device to configure an SCell for the first terminal.

In this embodiment, the first terminal may send the first request message to the relay device when the first terminal determines according to a service state that an SCell needs to be added. For example, the first terminal sends the first request message to the relay device when a service with a relatively high requirement on a network rate needs to be performed, to request the network device to configure an SCell for the first terminal. The service with a relatively high requirement on a network rate is, for example, a live streaming service, a video service, or a game service.

For the first request message in this embodiment, reference may be made to the related description in the foregoing embodiment, and details are not described herein.

It may be understood that, before sending the first request message to the relay device, the first terminal has established a communication connection to a primary cell and has established a communication connection to the relay device.

Step 302: The first terminal receives SCell configuration information sent by the relay device, where the SCell configuration information is used for configuring an SCell for the first terminal, and the SCell configuration information includes information of an SCell added by the relay device.

For the SCell configuration information in this embodiment, reference may be made to the related description in the foregoing embodiment, and details are not described herein.

Step 303: The first terminal activates the SCell configured by the SCell configuration information.

For example, when the SCell configuration information includes information of one SCell, the first terminal may activate the SCell, namely the SCell added by the relay device; or when the SCell configuration information includes information of at least two SCells, the first terminal may activate at least one of the at least two SCells, for example, the SCell added by the relay device.

In this embodiment, the SCell configuration information includes the information of the SCell added by the relay device, that is, when the SCell is configured for the first terminal, the information of the SCell added by the relay device is configured for the first terminal. This helps ensure consistency between the SCell added by the relay device and the SCell added for the first terminal, thereby reducing the occurrence of a mismatch between a transmission rate of the first terminal and a transmission rate of the relay device, and ensuring the transmission rate of the first terminal.

Optionally, before that a first terminal sends a first request message to a relay device, the method further includes:
the first terminal sends a query request to the relay device, where the query request is used for requesting to query carrier aggregation (CA) information of the relay device, and the CA information includes the information of the SCell added by the relay device;
the first terminal receives query response information sent by the relay device, where the query response information includes the CA information of the relay device; and
the first terminal stores the CA information of the relay device.

For example, when it is determined that a secondary cell needs to be added, the first terminal may send a query request to the relay device, and the relay device sends current CA information of the relay device to the first terminal in response to the query request. Alternatively, within a time period during which the relay device and the first terminal are in a communication connection state, the relay device may synchronize the CA information of the relay device to the first terminal. For example, the first terminal may send a query request to the relay device every preset duration, and the relay device sends current CA information of the relay device to the first terminal in response to the query request. The preset duration may be properly set according to an actual requirement to, for example, 1 minute or 5 minutes.

In this embodiment, the first terminal obtains and stores the CA information of the relay device, which facilitate secondary cell configuration and addition for the first terminal based on the CA information of the relay device. For example, a secondary cell configuration request, namely the first request message, is sent to the network device according to the CA information of the relay device, or a secondary cell is added according to the CA information of the relay device when the network device fails to configure a secondary cell for the first terminal, thereby helping ensure the consistency between the SCell added by the relay device and the SCell added for the first terminal.

Optionally, the first request message includes the CA information of the relay device.

For example, when the first terminal obtains the CA information of the relay device, the first terminal may add the CA information of the relay device to the first request message. In this way, when the relay device receives the first request message, the relay device may forward the CA information of the relay device included in the first request message to the network device.

In this embodiment, the first terminal adds the CA information of the relay device to the first request message. In this case, the relay device may directly forward the CA information of the relay device that is included in the first request message to the network device. This can simplify a processing flow of the relay device. In addition, this further helps reduce modification to the processing flow of the relay device since an existing relay device is usually only configured to forward a message.

Optionally, the method further includes: the first terminal activates the SCell according to the stored CA information of the relay device, when the first terminal fails to receive the SCell configuration information sent by the relay device.

In this embodiment, when the first terminal fails to receive the SCell configuration information, for example, fails to receive the SCell configuration information due to poor network quality, the first terminal may obtain the stored CA information of the relay device, obtain, from the CA information of the relay device, the information of the SCell added by the relay device, and activate the SCell added by the relay device, that is, the SCell added by the relay device is also used as the SCell for the first terminal. This can reduce occurrence of failure to add the SCell to the first terminal caused by failure to receive the SCell configuration information, thereby helping ensure a transmission rate of the first terminal.

In some optional embodiments, after activating the SCell, the first terminal may send a piece of feedback information to the network device, to indicate the SCell activated by the first terminal to the network device, so as to ensure consistency of understanding between the first terminal and the network device.

Refer to FIG. 4. FIG. 4 is a flowchart of a cell configuration method according to an embodiment of this application. The method may be performed by a network device. As shown in FIG. 4, the method includes the following steps.

Step 401: The network device receives a second request message sent by a relay device, where the second request message is used for requesting the network device to configure an SCell for a first terminal.

It should be noted that, for the second request message in this embodiment, reference may be made to the related description in the foregoing embodiments, and details are not described herein.

Step 402: The network device sends SCell configuration information sent by the relay device, where the SCell configuration information is used for configuring an SCell for the first terminal, and the SCell configuration information includes information of an SCell added by the relay device.

In this embodiment, when the network device receives the second request message, the network device may configure the SCell for the first terminal. For example, when the second request message includes information of the SCell added by the relay device, the network device may configure the SCell added by the relay device for the first terminal. When the second request message includes no information of the SCell added by the relay device, the network device may locally search for the information of the SCell added by the relay device, and then may configure the SCell added by the relay device for the first terminal.

It should be noted that, when configuring the SCell for the first terminal, in addition to considering the information of the SCell added by the relay device, the network device further needs to consider factors such as signal quality of the cell and a capability of the terminal. For example, when the signal quality of the SCell added by the relay device satisfies a threshold requirement, the network device may preferentially configure, for the first terminal, the SCell added by the relay device; or when the signal quality of the SCell added by the relay device does not satisfy the threshold requirement, the network device may not configure, for the first terminal, the SCell added by the relay device.

In this embodiment, the SCell configuration information includes the information of the SCell added by the relay device, that is, when the SCell is configured for the first terminal, the information of the SCell added by the relay device is configured for the first terminal. This helps ensure consistency between the SCell added by the relay device and the SCell added for the first terminal, thereby reducing the occurrence of a mismatch between a transmission rate of the first terminal and a transmission rate of the relay device, and ensuring the transmission rate of the first terminal.

Optionally, the second request message includes CA information of the relay device, and the CA information includes the information of the SCell added by the relay device.

It should be noted that, for an implementation of this embodiment, reference may be made to related descriptions in the embodiment shown in FIG. 2. Details are not described herein again.

Optionally, after that a network device receives a second request message sent by a relay device, the method further includes:
the network device obtains the information of the SCell added by the relay device; and
the network device determines the SCell configuration information based on the information of the SCell added by the relay device.

For example, when the second request message carries no CA information of the relay device, the network device may locally search for the CA information of the relay device, and then configure information of the SCell in the CA information of the relay device for the first terminal. That is, the SCell configuration information includes the information of the SCell added by the relay device.

In this embodiment, the network device determines the information of the SCell added by the relay device and configures the information of the SCell for the first terminal. This can not only ensure that the SCell configured for the first terminal is the current SCell of the relay device, but also save signaling overhead.

The following describes this embodiment of this application by using an example.

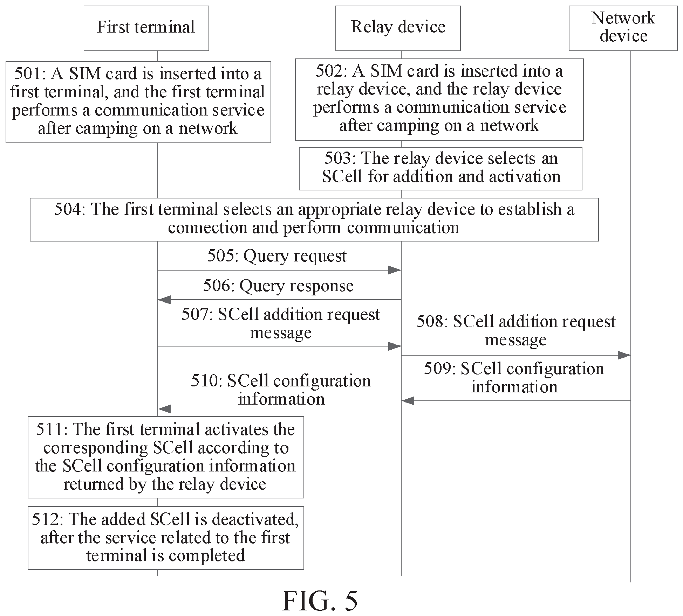

As shown in FIG. 5, a cell configuration method according to an embodiment of this application includes the following steps:
Step 501: A SIM card is inserted into a first terminal, and the first terminal performs a communication service after camping on a network.

In this step, the first terminal selects a cell in a CA cell set for access, and completes a network attachment procedure on a PCell to establish an initial connection. The PCell refers to a cell on which the first terminal camps, namely a primary serving cell of the first terminal, and is responsible for RRC communication with the first terminal.

It should be noted that an SCell is added during RRC reconfiguration and is configured to provide additional radio resources. A CA cell set refers to a logic set in which a plurality of cells are configured on a base station, where only cells within the set are allowed to be aggregated, and the network device configures relevant parameters of the CA cell set.

Step 502: A SIM card is inserted into a relay device, and the relay device performs a communication service after camping on a network.

In this step, the SIM card is inserted into the relay device, and the relay device selects a corresponding cell for camping on a network, and performs a communication service. For example, the relay device is registered in a 5G network.

Step 503: The relay device selects an SCell for addition and activation.

In this step, the relay device may send an A4 measurement report to the network device, to require the network device to configure a corresponding SCell for the relay device. After receiving the measurement report from the relay device, the network device delivers the corresponding SCell to the relay device in an RRC message. The relay device obtains the SCell through parsing, and adds and activates the SCell.

Step 504: The first terminal selects an appropriate relay device to establish a connection and perform communication.

In this step, the first terminal sends query signaling to relay devices around the first terminal, selects a relay device that has a matching capability and satisfies a threshold condition (for example, a signal threshold or a connection threshold) for access, and establishes service communication.

Step 505: The first terminal sends a query request for a registered frequency band and CA information to the relay device.

In this step, the first terminal sends query (Query) signaling for the registered frequency band and the CA information to the connected relay device. For example, a new pair of signaling may be added specifically for query and synchronization of the registered frequency band and the CA information between the relay device and the first terminal.

Step 506: The relay device sends the registered frequency band and the CA information to the first terminal.

In this step, after receiving query signaling for the registered frequency band and the CA information that is sent by the first terminal, the relay device inserts information of the frequency band currently registered by the relay device and the CA information into query response information (Response) signaling and sends the signaling to the first terminal.

It should be noted that when the relay device currently adds an SCell, the relay device carries information of the SCell in a CA field in query response information; or when the relay device currently adds no SCell, the query response information carries no CA field.

Step 507: The first terminal sends an SCell addition request message to the relay device when it is determined according to a current service state that an SCell needs to be added.

In this step, after receiving the query response information signaling from the relay device, the first terminal obtains the frequency band information and the CA information carried in the query response information signaling through parsing and stores the frequency band information and the CA information in the first terminal. When the first terminal performs a corresponding communication service, for example, games or viewing live streaming, if the first terminal determines that a corresponding SCell needs to be added to increase a network rate to achieve better network experience, the first terminal sends an SCell addition request message (namely the first request message) to the relay device, to notify the relay device that the first terminal currently requests to add or configure an SCell. The SCell addition request message includes a measurement report, for example, an A4 measurement report.

Step 508: The relay device synchronizes, to the network device, the SCell addition request message sent by the first terminal.

In this step, after receiving the measurement report sent by the first terminal, the relay device parses registration information of the first terminal in the measurement report, and performs corresponding processing according to the registration information of the first terminal. Descriptions are provided below according to cases.
(1) When a first SIM card and a second SIM card belong to a same operator, the relay device performs the following processing:
   if the relay device currently has added an SCell, the relay device inserts the CA information added by the relay device into the A4 measurement report, and then synchronizes the measurement report to the network device; or
   if the relay device currently adds no SCell, the relay device sends the measurement report to the network device.
(2) When the first SIM card and the second SIM card do not belong to the same operator, the relay device directly sends the measurement report to the network device.
(3) When the first SIM card and the second SIM card do not belong to the same operator, but two operator networks thereof support inter-operator network roaming, the relay device performs the following processing:
   if the relay device currently has added an SCell, the relay device inserts the CA information added by the relay device into the A4 measurement report, and then synchronizes the measurement report to the network device; or
   if the relay device currently adds no SCell, the relay device sends the measurement report to the network device.

The first SIM card is a SIM card used by the relay device to connect to a network, and the second SIM card is a SIM card used by the first terminal to connect to a network.

Step 509: The network device returns SCell configuration information to the relay device according to the SCell addition request message.

In this step, after receiving the measurement report sent by the relay device, the network device obtains CA information in the measurement report through parsing. If the measurement report includes the CA information, the network device directly inserts SCell information in the CA information into an RRC message to feed back to the relay device; or if the measurement report includes no CA information, the network device needs to query and deliver SCell information to the relay device according to a current network status. The SCell information is also inserted into RRC signaling.

Step 510: The relay device synchronizes the received SCell configuration information to the first terminal.

In this step, when receiving the RRC signaling sent by the network device, the relay device continues to send the RRC signaling to the first terminal.

Step S511: The first terminal activates the corresponding SCell according to the SCell configuration information returned by the relay device.

In this step, when receiving the RRC signaling sent by the relay device, the first terminal obtains the SCell configuration information in the RRC signaling through parsing, updates the CA information stored in the first terminal in step 507, and activates the SCell obtained through parsing. In this case, the first terminal completes replication of the CA information of the relay device.

Step 512: The added SCell is deactivated, after the service related to the first terminal is completed.

In this step, when completing a corresponding communication service, the first terminal deactivates the added SCell, so that a power saving requirement can be satisfied to some extent.

To sum up, in this embodiment of this application, with reference to advantages of the CA and sidelink (Sidelink) relay (Relay) technology, after selecting the relay device, the first terminal may replicate the CA of the relay device to the first terminal. In this way, on one hand, a flow of adding the CA for the first terminal may be optimized, to improve efficiency of adding the CA; and on the other hand, the CA of the first terminal and the relay device may be unified, to avoid congestion and stalling caused by a mismatch of transmission rates, thereby further improving user experience of a service such as Internet access.

It should be noted that the cell configuration method according to this embodiment of this application may be performed by a cell configuration apparatus, or by a control module in the cell configuration apparatus, which is configured to perform the cell configuration method. An example in which the cell configuration apparatus performs the cell configuration method is used in an embodiment of this application to describe the cell configuration apparatus according to this embodiment of this application.

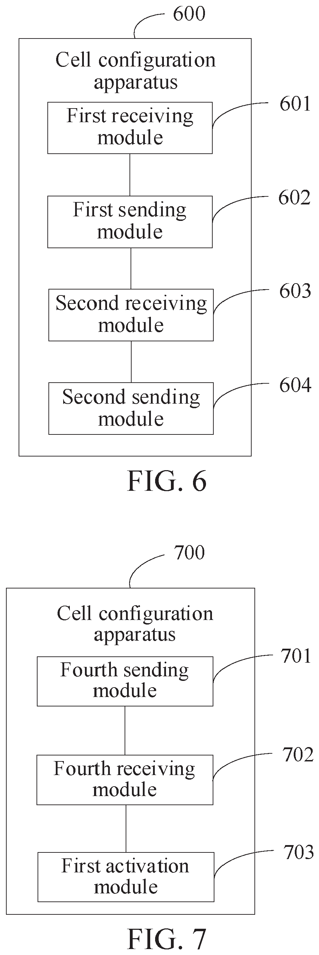

Refer to FIG. 6. FIG. 6 is a structural diagram of a cell configuration apparatus according to an embodiment of this application. As shown in FIG. 6, a cell configuration apparatus 600 includes: a first receiving module 601, configured to receive a first request message sent by a first terminal, where the first request message is used for requesting a network device to configure an SCell for the first terminal; a first sending module 602, configured to send a second request message to the network device, where the second request message is determined based on the first request message; a second receiving module 603, configured to receive SCell configuration information sent by the network device, where the SCell configuration information is used for configuring an SCell for the first terminal, and the SCell configuration information includes information of an SCell added by the relay device; and a second sending module 604, configured to send the SCell configuration information to the first terminal.

Optionally, the second request message includes CA information of the relay device, and the CA information includes the information of the SCell added by the relay device.

Optionally, the apparatus further includes: a generation module, configured to generate, before the sending a second request message to the network device, the second request message according to the first request message and the CA information of the relay device.

Optionally, the generation module is specifically configured to generate the second request message according to the first request message and current CA information of the relay device, when the relay device and the first terminal satisfy a first condition, where the first condition includes any one of the following:
a first SIM card and a second SIM card belong to a same operator; and
a first operator to which the first SIM card belongs is different from a second operator to which the second SIM card belongs, and inter-operator network roaming is supported between a network of the first operator and a network of the second operator,
where the first SIM card is a SIM card used by the relay device to connect to a network, and the second SIM card is a SIM card used by the first terminal to connect to a network.

Optionally, the apparatus further includes: a third receiving module, configured to receive, before the receiving a first request message sent by a first terminal, a query request sent by the first terminal, where the query request is used for requesting to query CA information of the relay device; and a third sending module, configured to send query response information to the first terminal, where the query response information includes the CA information of the relay device.

Optionally, the first request message includes CA information of the relay device, the second request message includes CA information of the relay device, and the CA information of the relay device included in the second request message is the same as the CA information of the relay device included in the first request message.

The cell configuration apparatus in this embodiment of this application may be an electronic device, such as an electronic device with an operating system, or may be a component in the electronic device, such as an integrated circuit or a chip. The electronic device may be a terminal, or a base station, or another device other than the terminal and the base station. For example, the terminal may include, but is not limited to, the types of the terminals 11 listed above, and the another device may be a server, a network attached storage (Network Attached Storage, NAS), or the like. This is not specifically limited in this embodiment of this application.

The cell configuration apparatus according to this embodiment of this application can implement each process implemented in the method embodiment of FIG. 2, and achieve the same technical effect. To avoid repetition, details are not described herein.

Refer to FIG. 7. FIG. 7 is a structural diagram of a cell configuration apparatus according to an embodiment of this application. As shown in FIG. 7, a cell configuration apparatus 700 includes: a fourth sending module 701, configured to send a first request message to a relay device, where the first request message is used for requesting a network device to configure an SCell for the first terminal; a fourth receiving module 702, configured to receive SCell configuration information sent by the relay device, where the SCell configuration information is used for configuring an SCell for the first terminal, and the SCell configuration information includes information of an SCell added by the relay device; and a first activation module 703, configured to activate the SCell configured by the SCell configuration information.

Optionally, the apparatus further includes: a fifth sending module, configured to send, before the sending a first request message to a relay device, a query request to the relay device, where the query request is used for requesting to query CA information of the relay device, and the CA information includes the information of the SCell added by the relay device; a fifth receiving module, configured to receive query response information sent by the relay device, where the query response information includes the CA information of the relay device; and a storage module, configured to store the CA information of the relay device.

Optionally, the first request message includes the CA information of the relay device.

Optionally, the apparatus further includes: a second activation module, configured to activate the SCell according to the stored CA information of the relay device, when the receiving SCell configuration information sent by the relay device fails.

The cell configuration apparatus in this embodiment of this application may be an electronic device, such as an electronic device with an operating system, or may be a component in the electronic device, such as an integrated circuit or a chip. The electronic device may be a terminal or another device other than the terminal. For example, the terminal may include, but is not limited to, the types of the terminals 11 listed above, and the another device may be a server, a network attached storage (Network Attached Storage, NAS), or the like. This is not specifically limited in this embodiment of this application.

The cell configuration apparatus according to this embodiment of this application can implement each process implemented in the method embodiment of FIG. 3, and achieve the same technical effect. To avoid repetition, details are not described herein.

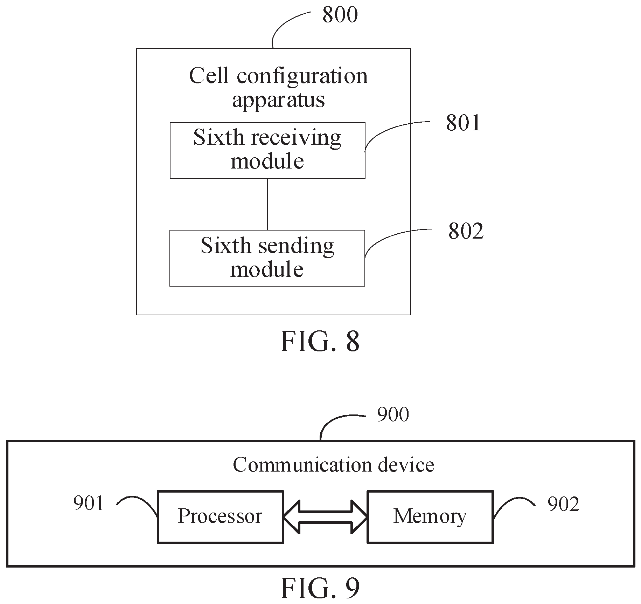

Referring to FIG. 8, FIG. 8 is a structural diagram of a cell configuration apparatus according to an embodiment of this application. As shown in FIG. 8, a cell configuration apparatus 800 includes: a sixth receiving module 801, configured to receive a second request message sent by a relay device, where the second request message is used for requesting the network device to configure an SCell for a first terminal; and a sixth sending module 802, configured to send SCell configuration information to the relay device, where the SCell configuration information is used for configuring an SCell for the first terminal, and the SCell configuration information includes information of an SCell added by the relay device.

Optionally, the second request message includes CA information of the relay device, and the CA information includes the information of the SCell added by the relay device.

Optionally, the apparatus further includes: an obtaining module, configured to obtain, after the receiving a second request message sent by a relay device, the information of the SCell added by the relay device; and a determining module, configured to determine the SCell configuration information based on the information of the SCell added by the relay device.

The cell configuration apparatus in this embodiment of this application may be an electronic device, such as an electronic device with an operating system, or may be a component in the electronic device, such as an integrated circuit or a chip. The electronic device may be a network device, or another device other than the network device. For example, the network device may include, but is not limited to, the types of the network devices 12 listed above, and the another device may be a server, a network attached storage (Network Attached Storage, NAS), or the like. This is not specifically limited in this embodiment of this application.

The cell configuration apparatus according to this embodiment of this application can implement each process implemented in the method embodiment of FIG. 4, and achieve the same technical effect. To avoid repetition, details are not described herein.

Optionally, as shown in FIG. 9, an embodiment of this application further provides a communication device 900, including a processor 901 and a memory 902. The memory 902 stores a program or instructions that can run on the processor 901. For example, when the communication device 900 is a relay device, the program or instructions, when executed by the processor 901, implement each step of the foregoing embodiment of the cell configuration method on the relay device side, which can achieve the same technical effect, or when the communication device 900 is a first terminal, the program or instructions, when executed by the processor 901, implement each step of the foregoing embodiment of the cell configuration method on the first terminal side, which can achieve the same technical effect. When the communication device 900 is a network device, the program or instructions, when executed by the processor 901, implement each step of the foregoing embodiment of the cell configuration method on the network device side, which can achieve the same technical effect. To avoid repetition, details are not described herein.

An embodiment of this application further provides a terminal, including a processor and a communication interface, where when the terminal is a relay device, the communication interface is configured to receive a first request message sent by a first terminal, where the first request message is used for requesting a network device to configure an SCell for the first terminal; send a second request message to the network device, where the second request message is determined based on the first request message; receive SCell configuration information sent by the network device, where the SCell configuration information is used for configuring an SCell for the first terminal, and the SCell configuration information includes information of an SCell added by the relay device; and send the SCell configuration information to the first terminal; or
when the terminal is a first terminal, the communication interface is configured to send a first request message to a relay device, where the first request message is used for requesting a network device to configure an SCell for the first terminal; and receive SCell configuration information sent by the relay device, where the SCell configuration information is used for configuring an SCell for the first terminal, and the SCell configuration information includes information of an SCell added by the relay device; and the processor is configured to activate the SCell configured by the SCell configuration information.

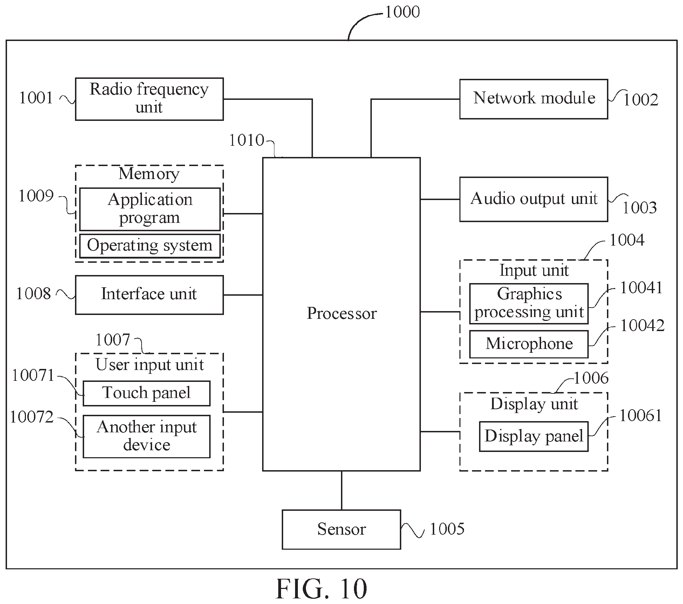

The terminal embodiment corresponds to the foregoing terminal side method embodiment, and each implementation process and implementation of the foregoing method embodiment can be applied to the terminal embodiment. This can achieve the same technical effect. Specifically, FIG. 10 is a schematic diagram of a hardware structure of a terminal according to an embodiment of this application.

The terminal 1000 includes, but is not limited to, at least some of the following components: a radio frequency unit 1001, a network module 1002, an audio output unit 1003, an input unit 1004, a sensor 1005, a display unit 1006, a user input unit 1007, an interface unit 1008, a memory 1009, and a processor 1010.

It may be understood by a person skilled in the art that the terminal 1000 may further include a power supply (such as a battery) for supplying power to various components. The power supply may be logically connected to the processor 1010 by using a power management system, so as to achieve charging, discharging, power consumption management, and other functions by using the power management system. The terminal structure shown in FIG. 10 does not constitute a limitation on the terminal. The terminal may include more or fewer components than those shown, or combine some components, or have different component arrangements. Details are not described herein.

It should be understood that in the embodiment of this application, the input unit 1004 may include a graphics processing unit (Graphics Processing Unit, GPU) 10041 and a microphone 10042. The graphics processing unit 10041 processes image data of a still picture or a video that is obtained by an image acquisition apparatus (for example, a camera) in a video acquisition mode or an image acquisition mode. The display unit 1006 may include a display panel 10061, and the display panel 10061 may be configured in the form of a liquid crystal display, an organic light-emitting diode, or the like. The user input unit 1007 includes at least one of a touch panel 10071 and another input device 10072. The touch panel 10071 is also referred to as a touchscreen. The touch panel 10071 may include two parts: a touch detection apparatus and a touch controller. The another input device 10072 may include, but is not limited to, a physical keyboard, a functional key (such as a volume control key or an on/off key), a track ball, a mouse, and a joystick. Details are not described herein.

In this embodiment of this application, after receiving downlink data from a network device, the radio frequency unit 1001 may transmit the data to the processor 1010 for processing. In addition, the radio frequency unit 1001 may send uplink data to the network device. Generally, the radio frequency unit 1001 includes, but is not limited to, an antenna, an amplifier, a transceiver, a coupler, a low noise amplifier, a duplexer, and the like.

The memory 1009 may be configured to store a software program or instructions and various data. The memory 1009 may mainly include a first storage area for storing a program or instructions and a second storage area for storing data, where the first storage area may store an operating system, an application program or instructions required for at least one function (such as a sound playing function and an image playing function), and the like. In addition, the memory 1009 may include a volatile memory or a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch link DRAM, SLDRAM), and a direct rambus random access memory (Direct Rambus RAM, DRRAM). The memory 1009 in this embodiment of this application includes, but is not limited to, these and any other suitable types of memories.

The processor 1010 may include one or more processing units. Optionally, the processor 1010 integrates an application processor and a modem processor, where the application processor mainly processes operations involving an operating system, a user interface, an application program, and the like, and the modem processor mainly processes wireless communication signals, such as a baseband processor. It may be understood that, the modem processor may alternatively not be integrated into the processor 1010.

The radio frequency unit 1001 is configured to receive a first request message sent by a first terminal, where the first request message is used for requesting a network device to configure an SCell for the first terminal; send a second request message to the network device, where the second request message is determined based on the first request message; receive SCell configuration information sent by the network device, where the SCell configuration information is used for configuring an SCell for the first terminal, and the SCell configuration information includes information of an SCell added by the relay device; and send the SCell configuration information to the first terminal;
or
the radio frequency unit 1001 is configured to send a first request message to a relay device, where the first request message is used for requesting a network device to configure an SCell for the first terminal; and receive SCell configuration information sent by the relay device, where the SCell configuration information is used for configuring an SCell for the first terminal, and the SCell configuration information includes information of an SCell added by the relay device.

The processor 1010 is configured to activate the SCell configured by the SCell configuration information.

It may be understood that, for the implementation process of each implementation mentioned in this embodiment, reference may be made to the related description in the foregoing method embodiments, and the same or corresponding technical effect is achieved. To avoid repetition, details are not described herein.

An embodiment of this application further provides a network device, including a processor and a communication interface, where the communication interface is configured to receive a second request message sent by a relay device, where the second request message is used for requesting the network device to configure an SCell for a first terminal; and send SCell configuration information to the relay device, where the SCell configuration information is used for configuring an SCell for the first terminal, and the SCell configuration information includes information of an SCell added by the relay device. The network device embodiment corresponds to the foregoing method embodiment for the network device, and each implementation process and implementation of the foregoing method embodiment can be applied to the network device embodiment. This can achieve the same technical effect.

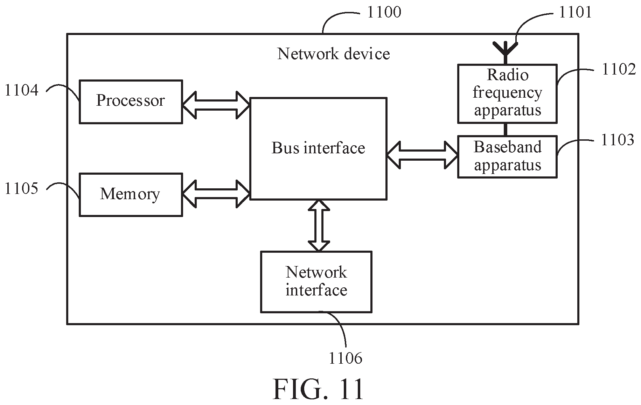

Specifically, an embodiment of this application further provides a network device. As shown in FIG. 11, a network device 1100 includes an antenna 1101, a radio frequency apparatus 1102, a baseband apparatus 1103, a processor 1104, and a memory 1105. The antenna 1101 is connected to the radio frequency apparatus 1102. In an uplink direction, the radio frequency apparatus 1102 receives information through the antenna 1101 and sends the received information to the baseband apparatus 1103 for processing. In a downlink direction, the baseband apparatus 1103 processes information to be sent and sends processed information to the radio frequency apparatus 1102. The radio frequency apparatus 1102 processes the received information and then sends processed information through the antenna 1101.

The method performed by the network device in the foregoing embodiment may be implemented in the baseband apparatus 1103. The baseband apparatus 1103 includes a baseband processor.

For example, the baseband apparatus 1103 may include at least one baseband board, and a plurality of chips are arranged on the baseband board. As shown in FIG. 11, one of the chips is, for example, a baseband processor, and is connected to the memory 1105 through a bus interface, so as to invoke a program in the memory 1105 to perform an operation of a network device shown in the foregoing method embodiment.

The network device may further include a network interface 1106. The interface is, for example, a common public radio interface (Common Public Radio Interface, CPRI).

Specifically, the network device 1100 according to this embodiment of this application further includes: instructions or a program stored in the memory 1105 and runnable on the processor 1104. The processor 1104 invokes the instructions or program in the memory 1105 to perform the method performed by each module shown in FIG. 8, to achieve the same technical effect. To avoid repetition, details are not described herein.

An embodiment of this application further provides a readable storage medium. A program or instructions are stored on the readable storage medium. The program or instructions, when executed by a processor, implement each process of the foregoing cell configuration method embodiment, which can achieve the same technical effect. To avoid repetition, details are not described herein.

The processor is the processor in the terminal in the foregoing embodiment. The readable storage medium includes a computer-readable storage medium, such as computer read-only memory ROM, a random access memory RAM, a magnetic disk, or an optical disc. In some examples, the readable storage medium may be a non-transitory readable storage medium.

An embodiment of this application further provides a chip. The chip includes a processor and a communication interface. The communication interface is coupled to the processor, and the processor is configured to run a program or instructions to implement each process of the foregoing cell configuration method embodiment, which can achieve the same technical effect. To avoid repetition, details are not described herein.

It should be understood that the chip mentioned in this embodiment of this application may also be referred to as a system on chip, a system chip, a chip system, a system-on-a-chip, or the like.

An embodiment of this application further provides a computer program/program product. The computer program/program product is stored on a storage medium. The computer program/program product is executed by at least one processor to implement each process of the foregoing cell configuration method embodiment, which can achieve the same technical effect. To avoid repetition, details are not described herein.

An embodiment of this application further provides a cell configuration system, including: a relay device, a first terminal, and a network device, where the relay device is configured to perform each process of FIG. 2 and the various method embodiments described above, the first terminal is configured to perform each process of FIG. 3 and the various method embodiments described above, and the network device is configured to perform each process of FIG. 4 and the various method embodiments described above, which can achieve the same technical effects. To avoid repetition, details are not described herein.

It should be noted that terms "including", "comprising" or any other variants thereof are intended to cover non-exclusive inclusion, so that a process, method, article, or apparatus including a series of elements includes not only those elements but also other elements not explicitly listed, or elements inherent to such a process, method, article, or apparatus. Without further limitation, an element defined by the phrase "including a ..." does not exclude the presence of an additional identical element in the process, method, article, or apparatus including the element. In addition, it should be noted that the scope of the method and apparatus in the implementations of this application is not limited to performing functions in the orders shown or discussed, but also may include performing functions in a substantially simultaneous manner or in a reverse order according to the functions involved. For example, the described method may be performed in an order different from that described, and various steps may be further added, omitted or combined. In addition, features described with reference to some examples can be combined in other examples.

Through the description of the foregoing implementations, a person skilled in the art can clearly understand that the method in the foregoing embodiment can be implemented by a computer software product plus a necessary universal hardware platform, or certainly, can be implemented by hardware. The computer software product is stored in a storage medium (such as an ROM, an RAM, a magnetic disk, or an optical disc), including several instructions to cause a terminal or a network device to perform the method according to each of the embodiments of this application.

The embodiments of this application are described above with reference to the accompanying drawings, but this application is not limited to the specific implementations described above, and the specific implementations described above are merely illustrative and not restrictive. A person of ordinary skill in the art may further make implementations in many forms under the teaching of this application without departing from the purpose of this application and the protection scope of the claims, and these implementations all fall within the protection scope of this application.

## Claims

1. A cell configuration method, comprising:
receiving, by a relay device, a first request message sent by a first terminal, wherein the first request message is used for requesting a network device to configure a secondary cell (SCell) for the first terminal;
sending, by the relay device, a second request message to the network device, wherein the second request message is determined based on the first request message;
receiving, by the relay device, SCell configuration information sent by the network device, wherein the SCell configuration information is used for configuring an SCell for the first terminal, and the SCellSCell configuration information comprises information of an SCell added by the relay device; and
sending, by the relay device, the SCell configuration information to the first terminal.

2. The method according to claim 1, wherein the second request message comprises carrier aggregation (CA) information of the relay device, and the CA information comprises the information of the SCell added by the relay device.

3. The method according to claim 2, wherein before the sending, by the relay device, a second request message to the network device, the method further comprises:
generating, by the relay device, the second request message according to the first request message and the CA information of the relay device.

4. The method according to claim 3, wherein the generating, by the relay device, the second request message according to the first request message and the CA information of the relay device comprises:
generating, by the relay device, the second request message according to the first request message and current CA information of the relay device, when the relay device and the first terminal satisfy a first condition, wherein
the first condition comprises any one of the following:
a first SIM card and a second SIM card belong to a same operator; and
a first operator to which the first SIM card belongs is different from a second operator to which the second SIM card belongs, and inter-operator network roaming is supported between a network of the first operator and a network of the second operator,
wherein the first SIM card is a SIM card used by the relay device to connect to a network, and the second SIM card is a SIM card used by the first terminal to connect to a network.

5. The method according to claim 1, wherein before the receiving, by a relay device, a first request message sent by a first terminal, the method further comprises:
receiving, by the relay device, a query request sent by the first terminal, wherein the query request is used for requesting to query CA information of the relay device; and
sending, by the relay device, query response information to the first terminal, wherein the query response information comprises the CA information of the relay device.

6. The method according to claim 5, wherein the first request message comprises CA information of the relay device, the second request message comprises CA information of the relay device, and the CA information of the relay device comprised in the second request message is the same as the CA information of the relay device comprised in the first request message.

7. A cell configuration method, comprising:
sending, by a first terminal, a first request message to a relay device, wherein the first request message is used for requesting a network device to configure an SCell for the first terminal;
receiving, by the first terminal, SCell configuration information sent by the relay device, wherein the SCell configuration information is used for configuring an SCell for the first terminal, and the SCell configuration information comprises information of an SCell added by the relay device; and
activating, by the first terminal, the SCell configured by the SCell configuration information.

8. The method according to claim 7, wherein before the sending, by a first terminal, a first request message to a relay device, the method further comprises:
sending, by the first terminal, a query request to the relay device, wherein the query request is used for requesting to query CA information of the relay device, and the CA information comprises the information of the SCell added by the relay device;
receiving, by the first terminal, query response information sent by the relay device, wherein the query response information comprises the CA information of the relay device; and
storing, by the first terminal, the CA information of the relay device.

9. The method according to claim 8, wherein the first request message comprises the CA information of the relay device.

10. The method according to claim 8, further comprising:
activating, by the first terminal, the SCell according to the stored CA information of the relay device, when the first terminal fails to receive the SCell configuration information sent by the relay device.

11. A cell configuration method, comprising:
receiving, by a network device, a second request message sent by a relay device, wherein the second request message is used for requesting the network device to configure an SCell for a first terminal; and
sending, by the network device, SCell configuration information sent by the relay device, wherein the SCell configuration information is used for configuring an SCell for the first terminal, and the SCell configuration information comprises information of an SCell added by the relay device.

12. The method according to claim 11, wherein the second request message comprises CA information of the relay device, and the CA information comprises the information of the SCell added by the relay device.

13. The method according to claim 11, wherein after the receiving, by a network device, a second request message sent by a relay device, the method further comprises:
obtaining, by the network device, the information of the SCell added by the relay device; and
determining, by the network device, the SCell configuration information based on the information of the SCell added by the relay device.

14. A cell configuration apparatus, applied to a relay device, the apparatus comprising:
a first receiving module, configured to receive a first request message sent by a first terminal, wherein the first request message is used for requesting a network device to configure an SCell for the first terminal;
a first sending module, configured to send a second request message to the network device, wherein the second request message is determined based on the first request message;
a second receiving module, configured to receive SCell configuration information sent by the network device, wherein the SCell configuration information is used for configuring an SCell for the first terminal, and the SCell configuration information comprises information of an SCell added by the relay device; and
a second sending module, configured to send the SCell configuration information to the first terminal.

15. The apparatus according to claim 14, wherein the second request message comprises CA information of the relay device, and the CA information comprises the information of the SCell added by the relay device.

16. The apparatus according to claim 15, further comprising:
a generation module, configured to generate, before the sending a second request message to the network device, the second request message according to the first request message and the CA information of the relay device.

17. The apparatus according to claim 16, wherein the generation module is specifically configured to:
generate the second request message according to the first request message and current CA information of the relay device, when the relay device and the first terminal satisfy a first condition, wherein
the first condition comprises any one of the following:
a first SIM card and a second SIM card belong to a same operator; and
a first operator to which the first SIM card belongs is different from a second operator to which the second SIM card belongs, and inter-operator network roaming is supported between a network of the first operator and a network of the second operator,
wherein the first SIM card is a SIM card used by the relay device to connect to a network, and the second SIM card is a SIM card used by the first terminal to connect to a network.

18. The apparatus according to claim 14, further comprising:
a third receiving module, configured to receive, before the receiving a first request message sent by a first terminal, a query request sent by the first terminal, wherein the query request is used for requesting to query CA information of the relay device; and
a third sending module, configured to send query response information to the first terminal, wherein the query response information comprises the CA information of the relay device.

19. The apparatus according to claim 18, wherein the first request message comprises CA information of the relay device, the second request message comprises CA information of the relay device, and the CA information of the relay device comprised in the second request message is the same as the CA information of the relay device comprised in the first request message.

20. A cell configuration apparatus, applied to a first terminal, the apparatus comprising:
a fourth sending module, configured to send a first request message to a relay device, wherein the first request message is used for requesting a network device to configure an SCell for the first terminal;
a fourth receiving module, configured to receive SCell configuration information sent by the relay device, wherein the SCell configuration information is used for configuring an SCell for the first terminal, and the SCell configuration information comprises information of an SCell added by the relay device; and
a first activation module, configured to activate the SCell configured by the SCell configuration information.

21. The apparatus according to claim 20, further comprising:
a fifth sending module, configured to send, before the sending a first request message to a relay device, a query request to the relay device, wherein the query request is used for requesting to query CA information of the relay device, and the CA information comprises the information of the SCell added by the relay device;
a fifth receiving module, configured to receive query response information sent by the relay device, wherein the query response information comprises the CA information of the relay device; and
a storage module, configured to store the CA information of the relay device.

22. The apparatus according to claim 21, wherein the first request message comprises the CA information of the relay device.

23. The apparatus according to claim 21, further comprising:
a second activation module, configured to activate the SCell according to the stored CA information of the relay device, when the receiving SCell configuration information sent by the relay device fails.

24. A cell configuration apparatus, applied to a network device, the apparatus comprising:
a sixth receiving module, configured to receive a second request message sent by a relay device, wherein the second request message is used for requesting the network device to configure an SCell for a first terminal; and
a sixth sending module, configured to send SCell configuration information sent by the relay device, wherein the SCell configuration information is used for configuring an SCell for the first terminal, and the SCell configuration information comprises information of an SCell added by the relay device.

25. The apparatus according to claim 24, wherein the second request message comprises CA information of the relay device, and the CA information comprises the information of the SCell added by the relay device.

26. The apparatus according to claim 24, further comprising:
an obtaining module, configured to obtain, after the receiving a second request message sent by a relay device, the information of the SCell added by the relay device; and
a determining module, configured to determine the SCell configuration information based on the information of the SCell added by the relay device.

27. A relay device, comprising a processor and a memory, wherein the memory stores a program or instructions runnable on the processor, and the program or instructions, when executed by the processor, implement the steps of the cell configuration method according to any one of claims 1 to 6.

28. A terminal, comprising a processor and a memory, wherein the memory stores a program or instructions runnable on the processor, and the program or instructions, when executed by the processor, implement the steps of the cell configuration method according to any one of claims 7 to 10.

29. A network device, comprising a processor and a memory, wherein the memory stores a program or instructions runnable on the processor, and the program or instructions, when executed by the processor, implement the steps of the cell configuration method according to any one of claims 11 to 13.

30. A readable storage medium, wherein the readable storage medium stores a program or instructions, and the program or the instructions, when executed by a processor, implement the steps of the cell configuration method according to any one of claims 1 to 6, or implement the steps of the cell configuration method according to any one of claims 7 to 10, or implement the steps of the cell configuration method according to any one of claims 11 to 13.
